# EUROPÄISCHE PATENTSCHRIFT

(11) **EP 1 284 594 B1**
(45) Veröffentlichungstag und Bekanntmachung des Hinweises auf die Patenterteilung: **14.02.2007**
(21) Anmeldenummer: 01273997.5
(22) Anmeldetag: 21.12.2001
(51) Int. Cl.: A01F 15/10

(54) **RAFFER FÜR EINE KOLBENPRESSE**
GATHERING ELEMENT FOR A PISTON PRESS
RAMASSEUR POUR PRESSE A PISTON

(30) Priorität: 19.03.2001 DE 20104700 U
(43) Veröffentlichungstag der Anmeldung: 26.02.2003
(73) Patentinhaber: Kverneland Group Geldrop B.V., 5667 KP Geldrop (NL)
(72) Erfinder: AMSTEL VAN, L., H., M., NL-6553 RW Geldrop (NL); WONDERGEM, M., J., NL-4388 VS Oost-Souburg (NL); WILDENBERG VAN DEN, L., J., NL-6021 CT Budel (NL); GALANT, J-C., F-45470 Rebrechien (FR)
(74) Vertreter: Grünecker, Kinkeldey, Stockmair & Schwanhäusser Anwaltssozietät
(86) Internationale Anmeldenummer: PCT/EP2001/015221
(87) Internationale Veröffentlichungsnummer: WO 2002/074065

(56) Entgegenhaltungen:
- EP-A- 0 508 186
- DE-A- 3 638 792
- DE-A- 3 913 496
- DE-A- 19 715 280
- DE-A- 19 829 276
- US-A- 5 768 872

## Beschreibung

Die Erfindung betrifft eine Kolbenpresse der im Oberbegriff des Anspruchs 1 angegebenen Art.

Bei der aus DE 197 15 280 bekannten Kolbenpresse ist das an einem in einem stationären Schwenklager abgestützten Steuerhebel angeordnete Steuergelenk mit einem Antrieb der Umschaltvorrichtung zwangsgekoppelt. Der Antrieb hält in einer Grundstellung das Steuergelenk in einer vorbestimmten Position, bei der sich die Rafferspitzen-Bewegungsbahn für einen Ladehub ergibt. Der Antrieb lässt sich wahlweise betätigen, um das Steuergelenk in die Position zu verstellen, bei der die Rafferspitzen die Zuführhub-Bewegungsbahn ausführen, und in dieser Position festzuhalten. Die Verstellung der Umschaltvorrichtung erfolgt entweder nur in zeitlicher Abstimmung auf die Bewegung des Presskolbens und abgeleitet vom Presskolbenantrieb oder zusätzlich unter Berücksichtigung eines Signals eines Sensors, der anzeigt, dass im Zuführkanal genügend Emtegut für einen Zuführhub vorhanden oder dieses Emtegut ausreichend vorverdichtet ist. Die Zwangskopplung des Steuergelenks mit dem Antrieb, die Antriebssteuerung und eine federbeaufschlagte Löseverbindung zwischen dem das Steuergelenk tragenden Steuerhebel und dem Sensor sind baulich aufwendig, bedingen viele verschleißanfällige Gelenke und beanspruchen viel Bauraum. Jeder Umschaltvorgang ist mit einem unerwünschten Ruck verbunden.

Bei der aus DE 36 38 792 A bekannten Kolbenpresse wird ein das Steuergelenk tragender, um die Achse des Kurbeltriebs schwenkbarer Steuerhebel permanent mittels eines Antriebs zwischen zwei Stellungen hin- und herbewegt, abhängig von der Presskolben-Hubbewegung. Durch die Wahl des Übersetzungsverhältnisses zwischen dem Antriebs des Presskolbens und dem Kurbeltrieb des Raffers mit 1:3 führt der Raffer zwangsweise jeweils zwei Ladehübe aus, auf die als dritter Hub ein Zuführhub folgt. Der Steuertrieb für die permanente Verstellung des Steuergelenks zwischen seinen beiden möglichen Positionen, die die Bewegungsbahnen für die Ladehübe bzw. die Zuführhübe definieren, ist aufwendig. Außerdem ist es nicht möglich, im Falle eines nicht ausreichend gefüllten Zuführkanals einen Zuführhub zu unterlassen, wenn dieser als dritter Hub fällig wird.

Bei der aus EP 0 120 780 A bekannten Kolbenpresse ist der das Steuergelenk tragende Steuerhebel drehbar auf einem stationär schwenkgelagerten Träger gelagert, der vom Kurbeltrieb des Presskolbens zyklisch hin- und hergeschwenkt wird. Zwischen der Schwenkachse des Steuerhebels auf dem Träger und der stationären Schwenkachse des Trägers ist ein Zahnradgetriebe angeordnet, mit dem über einen Riementrieb der Steuerhebel um seine Schwenkachse am Träger fortlaufend drehangetrieben wird. Es ergibt sich eine zwangsweise Abfolge mehrerer allmählich zunehmender Ladehübe und eines abschließenden Zuführhubs. Jedoch ist der apparative Aufwand im Steuertrieb außerordentlich hoch.

Weiterer Stand der Technik ist enthalten in: DE 198 29 276 A, US 5 768 872 A, DE 39 13 496 A und EP 0 508 186 A.

Der Erfindung liegt die Aufgabe zugrunde, eine Kolbenpresse der eingangs genannten Art anzugeben, die sich durch einen baulich einfachen, platzsparenden, verschleißunanfälligen und betriebssicheren Steuertrieb für die unterschiedlichen Bewegungsbahnen der Rafferspitzen auszeichnet.

Die gestellte Aufgabe wird mit den Merkmalen des Anspruchs 1 gelöst.

Für das Steuergelenk ist kein eigenständiger Antrieb mehr erforderlich, weil sich das Steuergelenk an sich frei mit dem Raffer bewegt, der dabei mit seinen Rafferspitzen die Bewegungsbahn für einen Ladehub ausführt. Zumindest einmal während einer solchen Bewegungsbahn wird das Steuergelenk vom Raffer zu einer extremen Position gebracht, die für die Bewegungsbahn des Zuführhubs gebracht wird. Die Umschaltvorrichtung braucht dann nur das Steuergelenk in dieser Position festzulegen, um einen Zuführhub einzusteuem. Außer der Bewegungsführung des Steuergelenks und der einfachen Umschaltvorrichtung sind im Steuertrieb keine zusätzlichen Komponenten enthalten. Das Steuergelenk kann sich beim Ladehub frei bewegen. Nur für einen Zuführhub wird es festgehalten. Dadurch ist der Steuertrieb baulich einfach und werden verschleißbedingte Gelenkstellen in ihrer Anzahl auf ein Minimum beschränkt. Die Betriebssicherheit ist hoch. Der Einbauraum ist gering.

Die Umschaltvorrichtung wird nur in der Extremposition des Steuergelenks und bei für einen Moment stillstehendem Steuergelenk geschaltet. Dies vermeidet Schläge.

Die Bewegungsführung des Steuergelenks wird baulich einfach durch einen stationär schwenkgelagerten Steuerhebel bewirkt. Wenn sich dessen Achse an der dem Zuführkanal abgewandten Seite des Kurbeltriebs für den Raffer befindet und sich der Steuerhebel von seiner Schwenkachse grob in Richtung zum Zuführkanal erstreckt, d.h. hängend angeordnet ist, ergibt sich eine günstige Bogenbahn für das Steuergelenk, die der Kurbeltrieb-Drehbewegung überlagert zu günstigen Formen der Bewegungsbahnen für die Ladehübe und die Zuführhübe führt. Das Steuergelenk könnte alternativ in einer frei gestaltbaren Führungsbahn verfahren.

Besonders zweckmäßig ist eine Anschlagkupplung zwischen dem Steuerarm des Rafferhebels und der Steuerstange, die über die Bewegungsbahn eines Ladehubes zumindest im Wesentlichen eingerückt ist und etwaige Reaktionsmomente aus dem Gegendruck des Emteguts im Zuführkanal an den Rafferspitzen in Bezug auf den Kurbelzapfen auf das Steuergelenk und das Schwenklager dessen Steuerhebels oder auf die erwähnte Führungsbahn des Steuergelenks überträgt.

Da die Anschlagkupplung zumindest über die Bewegungsbahn beim Ladehub im Wesentlichen in Eingriff bleibt, ist sie auch dafür verantwortlich, das Steuergelenk zumindest einmal während dieser Bewegungsbahn an die Position zu bringen, an der die Umschaltvorrichtung einfache eingreifen kann, um auf eine Bewegungsbahn für einen Zuführhub umzuschalten und das Steuergelenk in dieser Position festzulegen. Da die Anschlagkupplung nur in einer Bewegungsrichtung wirkt, wird sie selbsttätig gelöst, wenn die Rafferspitzen die Bewegungsbahn für einen Zuführhub beschreiben.

Günstig ist es ferner, zum Einrücken der Anschlagkupplung, und um diese in ihrem eingerückten Zustand zu halten, wenigstens ein Federelement vorzusehen, das in vorgespanntem Zustand zwischen dem Steuerarm des Rafferhebels und der Steuerstange, zweckmäßigerweise an der dem Zuführkanal zugewandten Seite des Gelenks, angeordnet ist. Über eine Bewegungsbahn eines Ladehubs hält das Federelement die Anschlagkupplung zumindest im Wesentlichen im Eingriff. Über die Bewegungsbahn eines Zuführhubs wird das Federelement gedehnt, weil das Steuergelenk festgelegt ist, und kommt die Anschlagkupplung, falls überhaupt, nur einmal kurz in Eingriff.

Im einfachsten Fall wird eine Betätigungsverbindung nur zwischen dem Presskolbenantrieb und der Umschaltvorrichtung vorgesehen, um die Umschaltvorrichtung zwangsweise in Abstimmung auf die Bewegung des Presskolbens zu verstellen. Um bei nicht ausreichend gefülltem Zuführkanal oder aus anderen Gründen einen Zuführhub zu unterlassen, ist es jedoch sehr zweckmäßig, eine weitere Betätigungsverbindung zu einem Sensor herzustellen, der den Füllungsgrad oder die Vorverdichtung im Zuführkanal abtastet und die Steuerung der Umschaltvorrichtung in Abhängigkeit vom Presskolbenhub übersteuert, um fallweise einen Zuführhub durch einen Ladehub zu ersetzen.

Baulich einfach ist die Umschaltvorrichtung mit einer Klinke ausgestattet, die ein Fangmaul für das Steuergelenk besitzt, um das Steuergelenk zu fassen und festzulegen, sobald es vom Rafferhebel bei einem Ladehub an die richtige Position gebracht worden ist. Die Klinke lässt sich stationär lagern und nimmt deshalb, auch hohe Reaktionskräfte des Raffers auf.

Alternativ kann es zweckmäßig sein, das Steuergelenk in seiner durch die Umschaltvorrichtung vorübergehend festgelegten Position gegen Federbelastung verstellen zu lassen, z.B. unter der Reaktionskraft des Raffers. Damit lässt sich ein wichtiger Sicherheitsaspekt in den Antrieb einbringen, weil das Steuergelenk trotz der Festlegung durch die Umschaltvorrichtung nicht absolut starr abgestützt wird, und können ggfs. die Bewegungsbahnen individuell modifiziert werden.

Im Bereich der Umschaltvorrichtung kann eine Überlastkupplung vorgesehen sein, die z.B. bei einer Blockierung, das Steuergelenk freigibt.

Um beispielsweise eine günstige Bewegungsbahn mit Beschleunigungs- und Verzögerungsphasen für die Rafferspitzen an den richtigen Stellen innerhalb des Zuführkanals zu erzielen, ist es zweckmäßig, den Antriebskurbelarm des Raffers kürzer als den Steuerarm des Rafferhebels und die Steuerstange in etwa so lange auszubilden wie den Rafferhebel, den das Steuergelenk tragenden Steuerhebel in etwa so lang auszubilden wie den Steuerarm am Rafferhebel, und die Umschaltvorrichtung an der dem Steuerhebel abgewandten Seite des Kurbeltriebs anzuordnen.

Trotz relativ kleinbauender Komponenten lässt sich eine lange Bewegungsbahn beim Zuführhub erzielen, wenn die Anschlagkupplung bei einem Winkel < 90° im Gelenk eingerückt ist, so dass sich der Steuerarm des Rasthebels relativ zur Steuerstange bei festgelegter Position des Steuergelenks fast bis in eine Strecklage bringen lässt.

Schließlich könnte eine das Steuergelenk permanent in Richtung zur Extremposition beaufschlagende Vorspannfeder vorgesehen sein.

Anhand der Zeichnung werden Ausführungsformen des Erfindungsgegenstandes erläutert. Es zeigen:
- Fig. 1: schematisch einen Längsschnitt eines Teils einer Kolbenpresse, deren Steuertrieb auf eine Rafferspitzen-Bewegungsbahn für einen Ladehub eingestellt ist,
- Fig. 2: schematisch im Längsschnitt den Teil der Kolbenpresse, wobei der Steuertrieb auf eine Rafferspitzen-Bewegungsbahn für einen Zuführhub eingestellt ist,
- Fig. 3: eine Detailvariante, und
- Fig. 4: eine weitere Detailvariante.

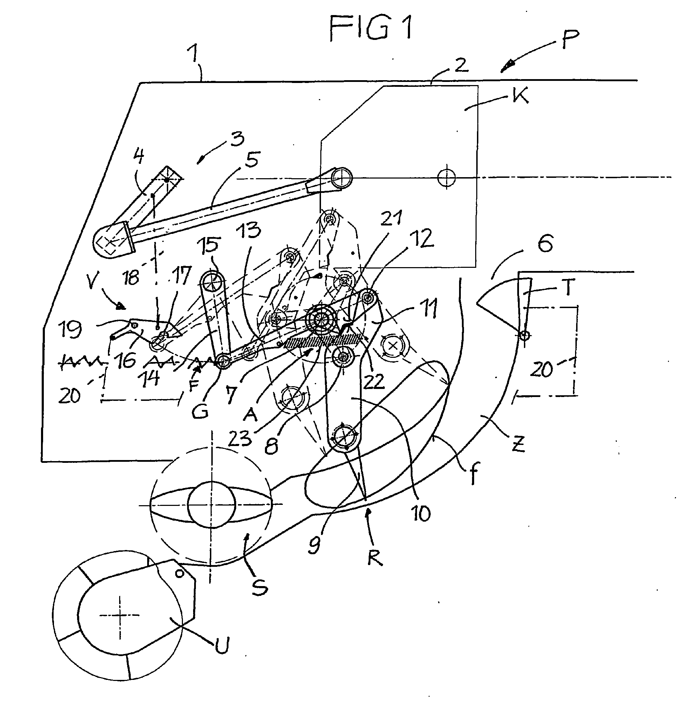

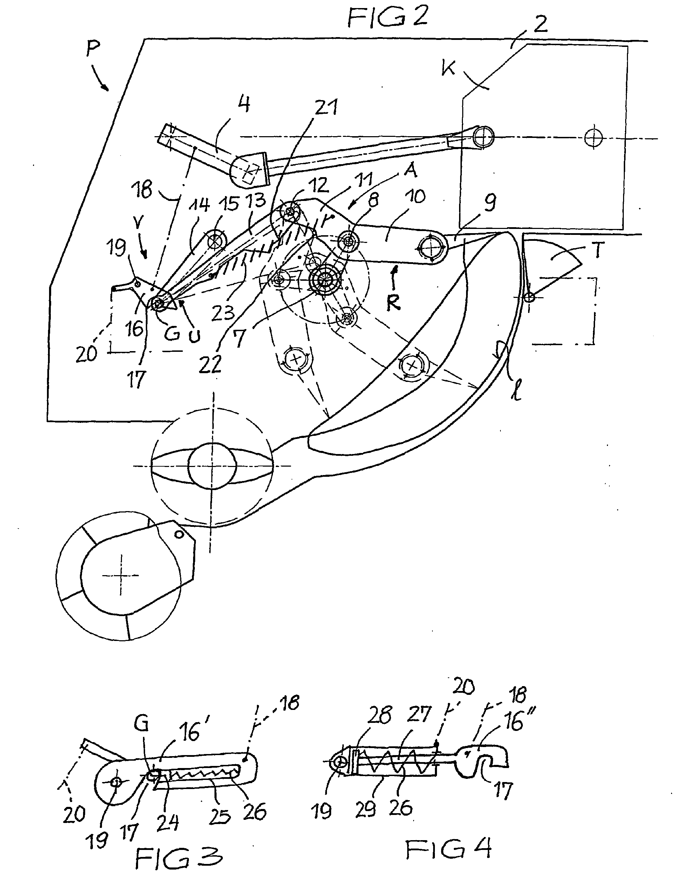

Eine in den Fig. 1 und 2 in unterschiedlichen Arbeitsphasen gezeigte Kolbenpresse P zum Herstellen von Erntegutballen (z.B. eine Groß-Packenpresse) weist in einem Gehäuse 1 einen Presskolben K auf, der in einem Presskanal 2 mittels eines Kurbeltriebs 3 zu einer hin- und hergehenden Bewegung antreibbar ist. Der Kurbeltrieb 3 umfasst beispielsweise eine Antriebskurbel 4, die mit einer vorbestimmten Drehgeschwindigkeit um eine stationäre Achse angetrieben ist und den Presskolben K über eine Pleuelstange 5 über einen Einlass 6 eines Zuführkanals Z hinweg verschiebt. Der Zuführkanal Z führt von der Einlassseite des Gehäuses 1 und einer Pick-up-Vorrichtung U und gegebenenfalls über ein Schneidwerk S zu Unterseite des Presskanals 2. Unmittelbar vor dem Einlass 6 ist ein Füllungssensor T angeordnet, der den Füllungsgrad im Zuführkanal Z bzw. die Vorverdichtung des darin enthaltenen, nicht gezeigten Emteguts abtasten kann und über eine Verbindung 20 (mechanisch, hydraulisch, elektrisch) entsprechende Signale überträgt. Der Füllungssensor T könnte auch an anderer Position als gezeigt postiert werden (am Raffer R, an den Rafferspitzen 9, im Rafferkurbeitrieb, oder in einem Gelenk des Steuertriebs, etc).

Im Zuführkanal Z arbeitet ein Raffer F, der von einem weiteren Kurbeltrieb über eine um eine stationäre Achse 7 drehangetriebene Kurbel mit einem Kurbelzapfen 8 (Drehrichtung entgegen dem Uhrzeigersinn) in eine schaufelnde Bewegung versetzt wird.

Der Raffer R besitzt Rafferspitzen 9 am freien Ende eines Rafferhebels 10, der am Kurbelzapfen 8 angelenkt ist. Der Rafferhebel 10 ist über den Kurbelzapfen 8 hinaus nach oben abgekröpft zu einem Steuerarm 11 verlängert, der in einem Gelenk 12 mit einer Steuerstange 13 verbunden ist, die zu einem Steuergelenk G führt. Das Steuergelenk G ist beweglich, beispielsweise bei der gezeigten Ausführungsform entlang einer Bogenbahn, die durch einen das Steuergelenk G tragenden, um eine stationäre Achse 15 schwenkbaren Steuerarm 14 definiert ist. Das Steuergelenk G und/oder der Steuerhebel 14 kann permanent durch eine Vorspannfeder F (Fig. 1) in Richtung zur Extremposition beaufschlagt sein. Die Komponenten 11, 12, 13, G, 14, 15 (F) bilden einen Steuertrieb für die jeweilige Bewegungsbahn der Rafferspitzen 9.

Bei der gezeigten Ausführungsform werden die Rafferspitzen 9 in zwei verschiedenen Bewegungsbahnen f und I, zumindest teilweise im Zuführkanal Z, geführt. Die Bewegungsbahn f repräsentiert einen Ladehub des Raffers R, bei dem eine Emtegutcharge bis in die Nähe des Einlasses 6 gefördert und vorverdichtet wird. Die Bewegungsbahn I repräsentiert einen Zuführhub, bei dem der Raffer R Emtegut in den Presskanal 2 und vor den Presskolben K fördert.

Die Drehgeschwindigkeit des Kurbeltriebs 3 ist auf die Drehgeschwindigkeit des Kurbelzapfens 8 so abgestimmt, dass der Kurbelzapfen 8 beispielsweise zwei volle Umdrehungen ausführt, während die Kurbel 4 eine Umdrehung ausführt. Ein Verhältnis von 1:3 oder kleiner oder sogar 1:1 wäre denkbar. Ferner ist die Abstimmung so getroffen, dass der Raffer R Erntegut nur dann in den Presskanal 2 fördert, wenn zuvor der Presskolben K hinter den Einlass 6 zurückbewegt ist.

Für den Steuertrieb ist eine Umschaltvorrichtung V vorgesehen, mit der die Bewegungsbahn I eingestellt wird. In der gezeigten Ausführungsform umfasst die Umschaltvorrichtung V eine Klinke 16, die um eine stationäre Achse 19 im Gehäuse 1 schwenkt und über eine Betätigungsverbindung 18 beispielsweise mit der Kurbel 4 verbunden ist. Über die Verbindung 20 kann auch das Signal des Füllungssensors T auf die Klinke 16 übertragen werden, und zwar direkt oder über einen Aktuator. Sofern der Sensor T vorgesehen und wirkungsmäßig mit der Umschaltvorrichtung V verknüpft ist, übersteuert das Signal des Sensors T die Betätigungsverbindung 18 derart, dass die Klinke 16 nur dann in die in Fig. 2 gezeigte, abgesenkte Position verstellt wird, wenn der Sensor T einen ausreichenden Füllungsgrad des Zuführkanals bzw. eine ausreichende Vorverdichtung des Emteguts festgestellt hat. Ist dies nicht der Fall, dann wird die Klinke 16 über den Sensor T in der in Fig. 1 gezeigten, angehobenen Position gehalten, obwohl die Betätigungsverbindung 18 die Klinke 16 in die abgesenkte Position verstellen möchte. Eine Betätigung der Umschaltvorrichtung V erfolgt stets nur in der Extremposition des dann auch stillstehenden Steuergelenks G. Die Klinke 16 kann durch eine nicht gezeigte Feder und einen Anschlag aus der angehobenen Position in Fig.1 in die abgesenkte Position gemäß Fig. 2 gesteuert sein. Anstelle der Klinke 16 kann eine andere Umschaltvorrichtung V verwendet werden, die in der Lage ist, wahlweise das Steuergelenk G zu positionieren oder frei beweglich zu belassen.

Zwischen dem Steuerarm 11 des Rafferhebels 10 und der Steuerstange 13 ist eine Anschlagkupplung A vorgesehen, die bei der gezeigten Ausführungsform Anschlagflächen 21, 22 am Steuerarm 11 und an der Steuerstange 13 aufweist. Zweckmäßig sind die Anschlagflächen 21, 22 jeweils zueinander passend abgewinkelt. In der in Fig. 1 gezeigten Einstellkondition des Steuertriebs (die Klinke 16 ist angehoben, das Fangmaul 17 kann das Steuergelenk G nicht festlegen) kann die Anschlagkupplung A über die gesamte Bewegungsbahn f eingerückt sein, wobei der Steuerarm 11 mit der Steuerstange 13 einen Winkel < 90° bezüglich des Gelenks 12 einschließt. Zusätzlich ist wenigstens ein vorgespanntes Federelement 23, das an der den Rafferspitzen 9 zugewandten Seite des Gelenks 12 am Steuerarm 11 einerseits und an der Steuerstange 13 andererseits verankert, das die Anschlagflächen 21, 22 zueinander beaufschlagt.

Bei der Steuerkondition in Fig. 1 bleibt die Anschlagkupplung A im Wesentlichen über die gesamte Bewegungsbahn f eingerückt. Der Förderwiderstand von Emtegut im Zuführkanal Z erzeugt ein Reaktionsdrehmoment im Rafferhebel 10 um den Kurbelzapfen 8 (im Uhrzeigersinn), das die Anschlagkupplung A im Eingriff hält und über die Steuerstange 13 auf die Schwenkachse 15 des Steuerhebels 14 übertragen wird. Das Steuergelenk wird entlang der Bogenbahn um die Schwenkachse 15 frei hin- und herbewegt. Solange der Sensor T keinen ausreichenden Füllungsgrad bzw. keine ausreichende Vorverdichtung des Emteguts ermittelt, bleibt die Klinke 16 angehoben. Bei jeder vollen Umdrehung des Kurbelzapfens 8 gelangt das Steuergelenk G einmal in die Extremposition (strichpunktiert angedeutet), in der das Fangmaul 17 der Klinke 16 in der Lage wäre, das Steuergelenk G zu fassen und festzulegen.

Die Steuerstange 13 erstreckt sich vom Gelenk 12 in Richtung zur Umschaltvorrichtung V. Der Steuerhebel 14 ist hängend montiert, d.h. seine Schwenkachse 15 liegt oben, während das am freien Ende des Steuerhebels 14 angebrachte Steuergelenk darunter liegt. Die Länge der Steuerstange 13 entspricht im Wesentlichen der Länge des Rafferhebels 10 mit seinem Steuerarm 11. Der Kurbelarm des Kurbelzapfens 8 ist etwas kürzer als der Steuerarm 11 des Rafferhebels 10. Der Steuerarm 11 ist in etwa so lange wie der Steuerhebel 14. Dies trifft nur beispielsweise für die gezeigte Ausführung zu. In der Praxis können sich Abweichungen ergeben.

In der Steuerkondition in Fig. 2 hat der Sensor T einen ausreichenden Füllungsgrad bzw. eine ausreichende Vorverdichtung des Emteguts im Zuführkanal Z festgestellt und ein Signal erzeugt, das das Absenken der Klinke 16 über die Betätigungsverbindung 18 von der Kurbel 4 zulässt. Sobald das Steuergelenk G bei der Bewegung der Rafferspitzen 9 entlang der Bewegungsbahn f in Fig. 1 in den Fangbereich des Fangmauls 17 gebracht wird, wird das Steuergelenk G (Fig. 2) in dieser Position festgelegt. Bei der weiteren Drehbewegung des Kurbelzapfens 8 werden die Anschlagkupplung A gelöst und das Federelement 23 gedehnt. Der Steuerarm 11 nimmt relativ zur Steuerstange 13 nahezu eine Streckstellung ein, so dass die Rafferspitzen 9 dann die Bewegungsbahn I durchfahren und einen Ladehub ausführen, bei dem das Emtegut (wenigstens eine vorverdichtete Charge) vor den zurückgezogenen Presskolben gefördert und nachfolgend in einen Ballen gepresst wird. Bei der weiteren Bewegung der Kurbel 4 wird über die Betätigungsverbindung 18 die Klinke 16 wieder angehoben, so dass das Fangmaul 17 das dann stillstehende Steuergelenk G freigibt und nachfolgend wieder die Bewegungsbahn f von Fig. 1 durchfahren wird, bei der sich das Steuergelenk G mit dem Steuerhebel 14 frei zu bewegen vermag.

In Fig. 3 ist eine Detailvariante für die Umschaltvorrichtung V gezeigt, bei der die Klinke 16' ein gegen eine Feder 26 in einer Schiebeführung 25 verschiebbares Widerlager 24 enthält. Damit ist dem an sich festgelegten Steuergelenk G ein Sicherheitshub gegen Federkraft möglich. Dadurch könnte eine Bewegungsbahn durchfahren werden, die in ihrem Aussehen und ihrer Größe in etwa zwischen den Bewegungsbahnen f und I liegt. Dieser gefederte Hub kann auch aus Sicherheitsgründen zweckmäßig sein. Die Verstellung der Klinke 16' erfolgt durch die Betätigungsverbindung 18 bzw. über die Verbindung 20, wobei die Verbindung 20 die Betätigungsverbindung 18 übersteuern kann.

In der Detailvariante in Fig. 4 ist die Klinke 16" an einer Kolbenstange 27 eines in einem Zylinder 29 verschiebbaren Kolbens 28 angebracht. Der Kolben 28 lässt sich gegen eine Feder 26 verstellen. Die Klinke 16" wird durch die Betätigungsverbindung 18 und/oder 20 um ihre Schwenkachse 19 verstellt.

Der Steuertrieb der Fig. 1 bis 4 ist baulich einfach und kompakt. Er benötigt keine von der Bewegung des Presskolbens K oder des Kurbelzapfens 8 abgeleitete, permanente Zwangssteuerung, weil das Steuergelenk G bei eingerückter Anschlagkupplung A zumindest einmal pro Hub vom Raffer R in die Position gebracht wird, in der die Umschaltvorrichtung V am dann stillstehenden Steuergelenk G angreifen kann, um dieses für die Bewegungsbahn I festzulegen. Es braucht nur die Umschaltvorrichtung V verstellt zu werden. In Fig. 2 ist im Bereich der Umschaltvorrichtung V eine Überlastkupplung U angedeutet, die, z.B. bei einer Blockierung, das Steuergelenk G trotz betätigter Umschaltvorrichtung lastabhängig freikommen lässt.

Wird keine Umschaltung mit Übersteuerung durch den Sensor T gewünscht, so kann durch das Übersetzungsverhältnis zwischen der Kurbel 4 und dem Kurbelzapfen 8 vorbestimmt werden, wie viele Ladehübe der Raffer R ausführt, ehe ein Zuführhub folgt. Wird hingegen der Sensor T wirkungsmäßig einbezogen, dann hängt es vom Füllungsgrad bzw. der Vorverdichtung im Zuführkanal ab, wie viele Ladehübe vor einem Zuführhub durchgeführt werden. Das Übersetzungsverhältnis zwischen der Kurbel 4 und dem Kurbelzapfen 8 ist dann von sekundärer Bedeutung. Es wäre sogar möglich, die Betätigungsverbindung 18 wegzulassen, und mit anderen Mitteln sicherzustellen, dass die Umschaltvorrichtung V das Steuergelenk G nur festlegt, wenn der Presskolben K in der richtigen Position ist.

## Patentansprüche

1. Kolbenpresse für Erntegutballen, mit einem in einem Presskanal (2) hin- und herbewegbaren Presskolben (K); einem in den Presskanal mündenden Zuführkanal (Z), in welchem ein von einem Kurbeltrieb getriebener Raffer (R) bewegbar ist, der mit Rafferspitzen (9) fördernde Rafferhebel (10) aufweist, deren jeder an einem Kurbelzapfen (8) des Kurbeltriebs angelenkt ist, mit einem Steuertrieb, und mit einer Umschaltvorrichtung (V) zum Ändem der vom Steuertrieb eingestellten Bewegungsbahn (l, f) der Rafferspitzen zwischen Lade- und Zuführhüben (l, f), wobei im Steuertrieb ein den Rafferhebel (10) über den Kurbelzapfen (8) verlängernder Steuerarm (11) in einem Gelenk (12) mit einer Steuerstange (13) gekoppelt ist, die in einem verlagerbaren Steuergelenk (G) abgestützt ist, das mittels der Umschaltvorrichtung (V) in wenigstens einer, einer Zuführhub-Bewegungsbahn (I) entsprechenden Position festlegbar ist, **dadurch gekennzeichnet, dass** das Steuergelenk (G) nur in der Position für einen Zuführhub (I) festgelegt und bei jedem Ladehub (f) frei beweglich bleibt.

2. Kolbenpresse nach Anspruch 1, **dadurch gekennzeichnet, dass** das Steuergelenk (G) im Steuertrieb mit dem Raffer (R) frei beweglich und durch den Raffer (R) innerhalb eines Ladehubs zu der Position für einen Zuführhub (I) bewegbar ist, an der es wahlweise mittels der Umschaltvorrichtung (V) festlegbar ist.

3. Kolbenpresse nach Anspruch 2, **dadurch gekennzeichnet, dass** die Umschaltvorrichtung (V) jeweils in der Position des Steuergelenks (G) für einen Zuführhub (I) und bei zumindest im wesentlichen bewegungslosen Steuergelenk (G) betätigbar ist.

4. Kolbenpresse nach Anspruch 1, **dadurch gekennzeichnet, dass** das Steuergelenk (G) an einem stationär schwenkgelagerten Steuerhebel (14) hängend angeordnet ist, dessen Schwenkachse (15) sich an der dem Zuführkanal (Z) abgewandten Seite des Kurbeltriebs befindet.

5. Kolbenpresse nach Anspruch 4, **dadurch gekennzeichnet, dass** zwischen dem Raffer (R) und der Steuerstange (13) eine Anschlagkupplung (A) vorgesehen ist, über die bei von der Umschaltvorrichtung (V) freigegebenem Steuergelenk (G) ein emtegutbedingtes Reaktionsmoment des Raffers um seinen Kurbelzapfen (8) am Steuerhebel (14) oder einer Bewegungsführung des Steuergelenks (G) abstützbar ist.

6. Kolbenpresse nach Anspruch 5, **dadurch gekennzeichnet, dass** die Anschlagkupplung (A) zumindest im Wesentlichen über eine volle Ladehub-Bewegungsbahn (f) eingerückt ist.

7. Kolbenpresse nach Anspruch 5, **dadurch gekennzeichnet, dass** die Anschlagkupplung (A) am Raffersteuerarm (11) und an der Steuerstange (13) angeordnete Anschläge (21, 22) aufweist.

8. Kolbenpresse nach Anspruch 5, **dadurch gekennzeichnet, dass** zwischen dem Steuerarm (11) des Rafferhebels (10) und der Steuerstange (13) wenigstens ein in Einrückrichtung der Anschlagkupplung (A) wirkendes Federelement (23) vorgesehen ist, vorzugsweise an der zum Zuführkanal (Z) weisenden Seite des Gelenks (12).

9. Kolbenpresse nach Anspruch 1, **dadurch gekennzeichnet, dass** zwischen der Umschaltvorrichtung (V) und dem Presskolbenantrieb und/oder einem Füllungssensor (T), z.B. einen Zuführkanalsensor, je eine Betätigungsverbindung (18, 20) vorgesehen ist.

10. Kolbenpresse nach Anspruch 1, **dadurch gekennzeichnet, dass** die Umschaltvorrichtung (V) eine um eine stationäre Achse (19) verschwenkbare Klinke (16) mit einem Fangmaul (17) für das Steuergelenk (G) aufweist.

11. Kolbenpresse nach Anspruch 1, **dadurch gekennzeichnet, dass** das in der Position für den Zuführhub (I) durch die Umschaltvorrichtung (V) festgelegte Steuergelenk (G) gegen Federbelastung (26) in Zugrichtung der Steuerstange (13) verstellbar ist.

12. Kolbenpresse nach Anspruch 1, **dadurch gekennzeichnet, dass** in der Umschaltvorrichtung (V) oder zwischen der Umschaltvorrichtung (V) und dem Steuergelenk (G) eine Überlastkupplung (U) vorgesehen ist.

13. Kolbenpresse nach Anspruch 4, **dadurch gekennzeichnet, dass** der Antriebskurbelarm des Kurbelzapfens (8) kürzer ist als der Steuerarm (11) des Rafferhebels (10), dass die Steuerstange (13) zwischen dem Gelenk (12) und dem Steuergelenk (G) in etwa solange ist wie der Steuerarm (11) des Rafferhebels (10) und dass die Umschaltvorrichtung (V) an der dem Kurbeltrieb abgewandten Seite des Steuergelenks (G) angeordnet ist.

14. Kolbenpresse nach Anspruch 5, **dadurch gekennzeichnet, dass** die Anschlagkupplung (K) bei einem Winkel < 90° im Gelenk (12) zwischen dem Steuerarm (11) und der Steuerstange (13) eingerückt ist.

15. Kolbenpresse nach Anspruch 2, **dadurch gekennzeichnet, dass** das Steuergelenk (G) oder der Steuerhebel (14) durch eine Vorspannfeder (F) in Richtung zur Position für einen Zuführhub beaufschlagt ist.

## Claims

1. Piston press for bales of harvested material, comprising a plunger piston (K) movable forwards and backwards in a baling channel (2), a feeding channel (Z) verging into the baling channel, in which a reel (R) driven by a crank mechanism is movable and includes reel levers (10) transporting by means of reel tips (9) and each linked to a crankshaft journal (8) of the crank mechanism, with a control drive, and comprising a switching device (V) for changing the movement path (I, f) of the reel tips adjusted by the control drive between loading and feeding strokes (I, f), wherein in the control drive a control arm (11) elongating the reel lever (10) via the crankshaft journal (8) is coupled in a joint (12) with a control rod (13) supported in a displaceable control joint (G), which can be fixed by the switching device (V) in at least one position corresponding to a movement path (I) of the feeding stroke, **characterized in that** the control joint (G) is fixed only in the position for a feeding stroke (I) and remains freely movable during each loading stroke (f).

2. Piston press according to claim 1, **characterized in that** the control joint (G) is freely movable in the control drive with the reel (R) and is movable by the reel (R) within a loading stroke to the position for a feeding stroke (I), in which it can optionally be fixed by the switching device (V).

3. Piston press according to claim 2, **characterized in that** the switching device (V) can be actuated in the position of the control joint (G) for a feeding stroke (I) and with an at least substantially motionless control joint (G).

4. Piston press according to claim 1, **characterized in that** the control joint (G) is arranged on a stationarily pivotably mounted control lever (14) in a suspending manner, whereof the pivoting axis (15) is positioned on the side of the crank mechanism facing away from the feeding channel (Z).

5. Piston press according to claim 4, **characterized in that** a stop coupling (A) is provided between the reel (R) and the control rod (13), via which, if the control joint (G) was released by the switching device (V), a reaction moment of the reel in response to the harvested material is supportable about its crankshaft journal (8) on the control lever (14) or a movement guide assembly of the control joint (G).

6. Piston press according to claim 5, **characterized in that** the stop coupling (A) is engaged at least substantially over a full loading stroke movement path (f).

7. Piston press according to claim 5, **characterized in that** the stop coupling (A) comprises stops (21, 22) arranged on the control arm (11) of the reel and on the control rod (13).

8. Piston press according to claim 5, **characterized in that** at least one spring element (23) acting in the engagement direction of the stop coupling (A) is provided between the control arm (11) of the reel lever (10) and the control rod (13), preferably on the side of the joint (12) facing the feeding channel (Z).

9. Piston press according to claim 1, **characterized in that** an actuating connection (18, 20) is provided between the switching device (V) and the plunger piston drive and/or a filling sensor (T), e.g. a feeding channel sensor.

10. Piston press according to claim 1, **characterized in that** the switching device (V) comprises a catch (16) with a catch mouth (17) for the control joint (G) pivotable about a stationary axis (19).

11. Piston press according to claim 1, **characterized in that** the control joint (G) fixed by the switching device (V) in the position for the feeding stroke (I) is adjustable against a spring load (26) in the direction of pull of the control rod (13).

12. Piston press according to claim 1, **characterized in that** a safety coupling (U) is provided in the switching device (V) or between the switching device (V) and the control joint (G).

13. Piston press according to claim 4, **characterized in that** the driving crank arm of the crankshaft journal (8) is shorter than the control arm (11) of the reel lever (10), that the control rod (13) between the joint (12) and the control joint (G) is approximately as long as the control arm (11) of the reel lever (10) and that the switching device (V) is arranged on the side of the control joint (G) facing away from the crank mechanism.

14. Piston press according to claim 5, **characterized in that** the stop coupling (K) is engaged at an angle < 90° in the joint (12) between the control arm (11) and the control rod (13).

15. Piston press according to claim 2, **characterized in that** the control joint (G) or the control lever (14) is loaded by a biasing spring (F) in the direction of the position for a feeding stroke.

## Revendications

1. Presse à piston pour des balles de matières récoltées, avec un piston de compression (K) apte à effectuer un mouvement alternatif dans un canal de compression (2); un canal d'amenée (Z) débouchant dans le canal de compression, dans lequel un ramasseur (R) entraîné par une commande à manivelle est déplaçable, qui présente des leviers de ramasseur convoyant avec des pointes de ramasseur (9) dont chacun est articulé à un tourillon (8) de la commande à manivelle, avec un organe d'entraînement, et avec un dispositif de commutation (V) pour modifier la trajectoire (1, f) réglée par l'organe de commande des pointes de ramasseur entre des courses de chargement et d'amenée (1, f), où dans l'organe de commande, un bras de commande (11) prolongeant le levier de ramasseur (10) par le tourillon (8) est couplé dans une articulation (12) avec une tige de commande (13), qui s'appuie sur une articulation de commande déplaçable (G), qui peut être fixée au moyen du dispositif de commutation (V) dans au moins une position correspondant à la trajectoire (1) de la course d'amenée, **caractérisée en ce que** l'articulation de commande (G) est fixée seulement dans la position pour une course d'amenée (1) et reste librement mobile à chaque course de chargement (f).

2. Presse à piston selon la revendication 1, **caractérisée en ce que** l'articulation de commande (G) est déplaçable dans l'organe de commande avec le ramasseur (R) d'une manière librement mobile, et est déplaçable par le ramasseur (R) à l'intérieur d'une course de chargement à la position pour une course d'amenée (1), à laquelle il peut être fixé sélectivement au moyen du dispositif de commutation (V).

3. Presse à piston selon la revendication 2, **caractérisée en ce que** le dispositif de commutation (V) est actionnable à chaque fois dans la position de l'articulation de commande (G) pour une course d'amenée (1), l'articulation de commande (G) étant au moins sensiblement sans mouvement.

4. Presse à piston selon la revendication 1, **caractérisée en ce que** l'articulation de commande (G) est accrochée à un levier de commande stationnaire (14) logé d'une manière pivotante, dont l'axe de pivotement se trouve au côté de la commande à manivelle éloignée du canal d'amenée (Z).

5. Presse à piston selon la revendication 4, **caractérisée en ce qu'**il est prévu entre le ramasseur (R) et la tige de commande (13) un dispositif de couplage de butée (A) par lequel, lorsque l'articulation de commande (G) est libérée par le dispositif de commutation (V), un couple de réaction du ramasseur autour de son tourillon (8) lié aux matières récoltées peut s'appuyer au levier de commande (14) ou un guidage de mouvement de l'articulation de commande (G).

6. Presse à piston selon la revendication 5, **caractérisée en ce que** le dispositif de couplage de butée (A) est rentré au moins sensiblement sur une trajectoire de course de chargement complète (f).

7. Presse à piston selon la revendication 5, **caractérisée en ce que** le dispositif de couplage de butée (A) présente des butées (21, 22) disposées au bras de commande de ramasseur (11) et à la tige de commande (13).

8. Presse à piston selon la revendication 5, **caractérisée en ce qu'**il est prévu entre le bras de commande (11) du levier de ramasseur (10) et la tige de commande (13) au moins un élément à ressort (23) agissant dans la direction d'engagement du dispositif de couplage de butée (A), de préférence au côté de l'articulation (12) orienté vers le canal d'amenée (Z).

9. Presse à piston selon la revendication 1, **caractérisée en ce qu'**il est prévu entre le dispositif de commutation (V) et l'entraînement du piston de compression et/ou un capteur de remplissage (T), par exemple un capteur de canal d'amenée, à chaque fois une liaison d'actionnement (18, 20).

10. Presse à piston selon la revendication 1, **caractérisée en ce que** le dispositif de commutation (V) présente un cliquet (16) apte à pivoter autour d'un axe stationnaire (19) avec une gueule d'arrêt (17) pour l'articulation de commande (G).

11. Presse à piston selon la revendication 1, **caractérisée en ce que** l'articulation de commande (G) fixée dans la position pour la course d'amenée (1) par le dispositif de commutation (V) est déplaçable contre la sollicitation de ressort (26) dans la direction de traction de la tige de commande (13).

12. Presse à piston selon la revendication 11, **caractérisée en ce qu'**il est prévu dans le dispositif de commutation (V) ou entre le dispositif de commutation (V) et l'articulation de commande (G) un accouplement de surcharge (U).

13. Presse à piston selon la revendication 4, **caractérisée en ce que** le bras de manivelle d'entraînement du tourillon (8) est plus court que le bras de commande (11) du levier de ramasseur (10), **en ce que** la tige de commande (13) entre l'articulation (12) et l'articulation de commande (G) est à peu près aussi longue que le bras de commande (11) du levier de ramasseur (10), et **en ce que** le dispositif de commutation (V) est disposé au côté de l'articulation de commande (G) éloigné de la commande à manivelle.

14. Presse à piston selon la revendication 5, **caractérisée en ce que** le dispositif de couplage de butée (K) est rentré selon un angle < 90° dans l'articulation (12) entre le bras de commande (11) et la tige de commande (13).

15. Presse à piston selon la revendication 2, **caractérisée en ce que** l'articulation de commande (G) ou le levier de commande (14) est chargé par un ressort de précontrainte (F) en direction de la position d'une course d'amenée.
